# EUROPÄISCHE PATENTSCHRIFT

(11) **EP 2 570 277 B1**
(45) Veröffentlichungstag und Bekanntmachung des Hinweises auf die Patenterteilung: **16.07.2014**
(21) Anmeldenummer: 12181220.0
(22) Anmeldetag: 21.08.2012
(51) Int. Cl.: B60G 17/019, G01P 15/00, G01P 3/00, B60W 40/10

(54) **Steuergerät für ein verstellbares Fahrwerk-System**
Control device for an adjustable suspension system
Appareil de commande pour un système de châssis réglable

(30) Priorität: 15.09.2011 DE 102011113332
(43) Veröffentlichungstag der Anmeldung: 20.03.2013
(73) Patentinhaber: ZF Friedrichshafen AG, 88038 Friedrichshafen (DE)
(72) Erfinder: Frankenberger, Wolfgang, 97294 Unterpleichfeld (DE); Rappelt, Stefan, 97529 Sulzheim (DE); Schuck, Toni, 97854 Steinfeld bei Lohr am Main (DE); Kissner, Stefan, 97618 Hohenroth (DE)

(56) Entgegenhaltungen:
- EP-A1- 1 355 161
- DE-A1- 3 907 870
- DE-A1- 4 110 374
- DE-A1- 10 015 273
- DE-A1- 10 039 978
- DE-A1- 19 645 952
- DE-A1- 19 744 084
- DE-C1- 19 539 566
- US-A1- 2006 100 820

## Beschreibung

Die Erfindung betrifft ein Steuergerät für ein verstellbares Fahrwerk-System gemäß dem Oberbegriff von Patentanspruch 1.

Für den einwandfreien Betrieb eines verstellbaren Fahrwerk-Systems werden Zustandsparameter des Fahrzeugs mittels einer Sensorik erfasst. Die Sensoren werden möglichst dort platziert, wo auch die zu messende Größe vorliegt. Diese Grundregel hat den Vorteil, dass etwaige negative Einflüsse auf die Signalqualität minimiert werden.

In der DE 199 50 177 A1 und der DE 44 27 559 A1 wird deshalb eine dezentrale Anordnung der Sensorik als besonders vorteilhaft beschrieben. Nun hat sich aber gezeigt, dass die Anordnung der Sensorik, z. B. der Beschleunigungssensoren, innerhalb des Schwingungsdämpfers verteuert wird, da die Verpackung der Sensoren sehr aufwändig ist. Die Sensoren müssen gegen Schmutz, Hitze und Feuchtigkeit geschützt werden. Der Schutzaufwand kostet unter Umständen mehr als ein Standardsensor.

Die DE 195 39 566 C1 offenbart ein Steuergerät für ein Fahrwerk-System. Das Steuergerät wird von einem einzigen Beschleunigungssensor mit Beschleunigungssignalen versorgt, die durch eine Zerlegung eines Gesamtbeschleunigungssignals in mehrere Signalkomponenten den Bewegungsachsen des Fahrzeugs zugeordnet werden können. Dieses Prinzip hat sich in der Praxis nicht durchsetzen können, da die Signalqualität nicht ausreichend war.

Die DE 100 15 273 A1 betrifft eine Steuervorrichtung für eine Unfallschutzeinrichtung. Eine derartige Unfallschutzeinrichtung soll die Art und den Startzeitpunkt eines Unfalls erkennen. Dazu werden mehrere Beschleunigungssensoren verwendet, die in einem Steuergerät angeordnet sind. Dabei sollen sich die Empfindlichkeitsrichtungen der Beschleunigungssensoren unbedingt schneiden und einen Tetraeder bilden. Damit wird offensichtlich nicht eine über das Steuergerät hinausgehende größere Messebene angestrebt.

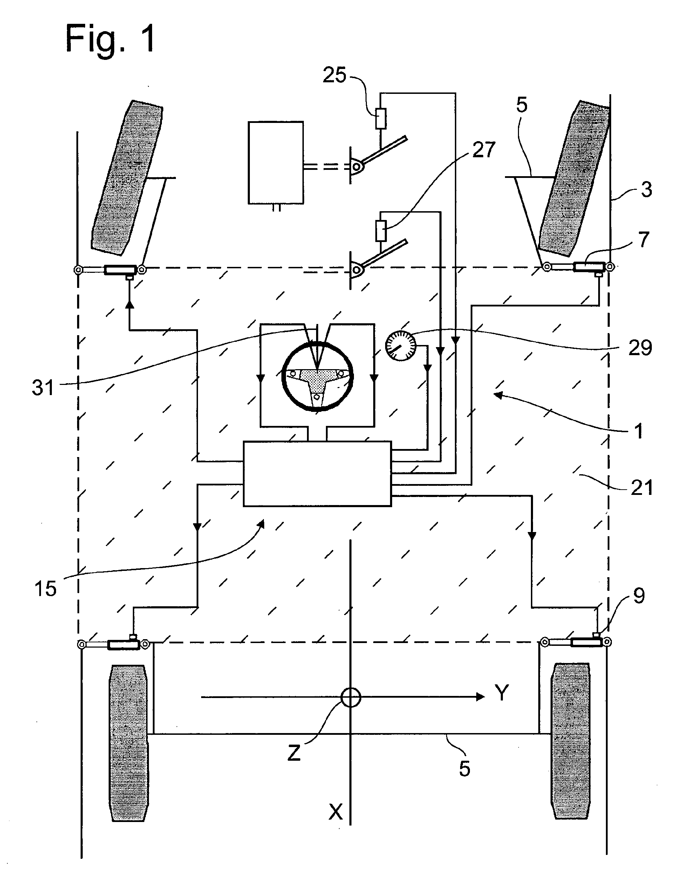

Die DE 41 10 374 A1 beschreibt eine Vorrichtung zur Erfassung der Bewegung eines Körpers. Im Zusammenhang mit der Fig. 1 wird erklärt, dass der Abstand des Sensors zum Fahrzeugschwerpunkt relevant ist. In der Figurenfolge 11 ist ersichtlich, dass die Sensoren bevorzugt mit einem großen räumlichen Abstand eingesetzt werden.

Die EP 1 355 161 A1 offenbart ein Verfahren zur Berechnung der Fahrzeugaufbaubeschleunigung mittels eines einzigen Sensors.

Die Aufgabe der vorliegenden Erfindung besteht darin, die aus dem Stand der Technik bekannte Problematik der Sensoranordnung und des Sensorschutzes zu minimieren.

Erfindungsgemäß wird die Aufgabe durch die Merkmale des Patentanspruchs 1 gelöst.

Der große Vorteil der Erfindung besteht darin, dass die Sensorik genau dort angeordnet ist, wo sie sich besonders leicht implementieren lässt. Das Steuergerät bietet einerseits einen Schutz und andererseits ist der Montageort in der Regel außerhalb besonders belasteter Zonen. Die Verdrahtung im Fahrzeug reduziert sich, ebenso wie bisher notwendige Schnittstellen.

Das Steuergerät ist an einer definierten Stelle im Fahrzeug montiert. Folglich können aus den geometrischen Abmessungen des Fahrzeugs, z. B. den Abständen von verstellbaren Schwingungsdämpfern zum Steuergerät Koordinaten festgelegt werden, über die die Fahrzustandssignale leicht extrapolierbar sind.

In der einfachsten Ausführung stellt die Sensorik ein Beschleunigungssignal bezogen auf eine Fahrzeuglängsachse, eine Fahrzeugquerachse und eine Fahrzeughochachse bereit.

Wenn die Sensorik durch die Anordnung innerhalb des Steuergeräts einen Abstand zu den für die Einstellung des Fahrwerk-Systems relevanten Positionen einnimmt, dann verändert sich proportional auch die Signalgröße. Die Veränderung führt, da das Steuergerät tendenziell in der Nähe des Fahrzeugschwerpunkts angeordnet ist, zu einer Signalstärkenreduzierung. Diese Signalstärkenreduzierung könnte durch die Verwendung von besonders hochwertigen, d. h. hochauflösenden Sensoren kompensiert werden. Das Problem lässt sich jedoch viel einfacher lösen, indem man ein Drehratensignal bezogen auf eine Fahrzeuglängsachse, eine Fahrzeugquerachse und eine Fahrzeughochachse bereitstellt und die Drehratensignale in die Berechung des Fahrzustands einfließen lässt.

Eine weitere Möglichkeit zur Vereinfachung der Sensorik besteht darin, dass das Beschleunigungssignal für alle drei Fahrzeugachsen von einem einzigen Sensor bereitgestellt wird. Dadurch, dass drei Fahrzeugachsen in einem Koordinatensystem des Sensors zusammengefasst sind, bestimmt sich auch eine virtuelle Ebene.

Auch bei einer erweiterten Sensorik, die Drehratensignale erfasst, kann eine Bauraumoptimierung erreicht werden, indem das Drehratensignal für alle drei Fahrzeugachsen von einem einzigen Sensor bereitgestellt wird.

In der nochmals optimierten Variante werden die Beschleunigungssignale und die Drehratensignale von einem einzigen Sensor bereitgestellt. Diese Bauteil- und Funktionsverdichtung führt zu einer weiteren Miniaturisierung des Steuergeräts.

Für eine problemlose Integration des Steuergeräts in einem Fahrzeug ist es vorteilhaft, wenn das Steuergerät vor allem nach Bauraumgesichtspunkten montiert werden kann. Dafür ist vorgesehen, dass das Steuergerät einen Algorithmus aufweist, der eine Winkelposition des Steuergeräts zur Messebene kompensiert. Damit kann das Steuergerät beliebig im Fahrzeug montiert sein, die für den Betrieb des Fahrwerk-Systems notwendige virtuelle Ebene ist stets identisch ausgerichtet.

Anhand der folgenden Figurenbeschreibung soll die Erfindung näher erläutert werden.
- Fig. 1: Prinzipdarstellung eines Fahrzeugs
- Fig. 2: Vereinfachte Darstellung der Sensorik im Steuergerät
- Fig. 3: Steuergerät mit Beschleunigungs- und Drehratensensorik

Die Figur 1 zeigt ein Prinzipschaubild eines Fahrwerk-Systems 1 für einen Fahrzeugaufbau 3. Mindestens eine Achse 5; 7 des Fahrwerks 1 ist mit Schwingungsdämpfern 9, 11 ausgeführt, die über mindestens ein verstellbares Dämpfventil 13 in ihrer Dämpfkraft einstellbar sind. Beispielhaft wird auf die DE 196 24 897 C2 verwiesen. Grundsätzlich ist die Erfindung auch bei anderen verstellbaren Fahrwerk-Systemen, z. B. einem verstellbaren Stabilisator verwendbar.

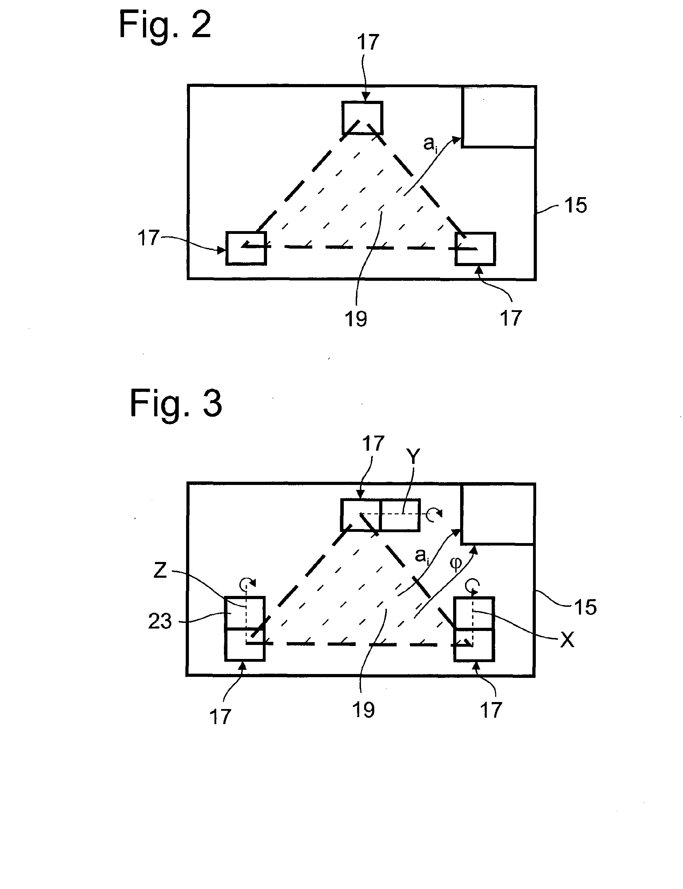

Die verstellbaren Dämpfventile 13 werden über ein Steuergerät betätigt 15. Basis der Dämpfventileinstellung ist ein Fahrzustand, der von einer Sensorik 17 erfasst wird, Fig. 2. Die Sensorik 17 stellt in der einfachsten Ausführung ein Beschleunigungssignal aᵢ bezogen auf eine Fahrzeuglängsachse X, eine Fahrzeugquerachse Y und eine Fahrzeughochachse Z bereit. Die Sensorik ist innerhalb des Steuergeräts angeordnet und bildet eine virtuelle Miniatur-Messebene 19, die auf eine tatsächliche Messebene 21 extrapoliert ist. Man kann über drei einzelne Sensoren eine Miniatur-Messebene aufspannen, da drei zueinander definierte Punkte im Raum eine Ebene beschreiben. Die Fahrzeugabmessungen und die Lage des Steuergeräts 15 im Fahrzeug sind bekannt, so dass die Extrapolation mit den Mitteln der Vektoralgebra möglich ist.

Die Sensorik umfasst optional gemäß Fig. 1 eine Drehratensensorik 23, die ein Drehratensignal bezogen auf eine Fahrzeuglängsachse, eine Fahrzeugquerachse und eine Fahrzeughochachse bereitstellt. Die Drehratensensorsignale ϕ werden mit den Beschleunigungssignalen aᵢ überlagert. Es könnte sein, dass das Steuergerät 15 exakt im Schwerpunkt des Fahrzeugs angeordnet ist. Bei einer reinen Rollbewegung des Fahrzeugaufbaus um die Fahrzeuglängsachse x träte bei idealisierter Betrachtung keine Vertikalbeschleunigung auf. Folglich würde das Beschleunigungssignal eine unzutreffende Beschreibung des tatsächlichen Fahrzustands darstellen. Das Drehratensignal kompensiert jedoch diese Abweichung.

Man kann das Beschleunigungssignal für alle drei Fahrzeugachsen auch von einem einzigen Sensor bereitstellen. Ein derartiger Sensor verfügt über drei integrierte Messachsen.

Auch für das Drehratensignal gibt es einzelne Sensoren, die für alle drei Fahrzeugachsen ein Drehratensignal bereitstellen.

Besonders kompakt gestaltet sich das Steuergerät, wenn die Beschleunigungssignale und die Drehratensignale von einem einzigen Sensor bereitgestellt werden.

In den Figur 1 bis 3 ist das Steuergerät 15 idealisiert bezogen auf das Koordinatensystem des Fahrzeugs dargestellt. In der Realität kommt es sehr häufig vor, dass das Steuergerät 15 schräg im Raum bezogen auf die tatsächliche Messebene 21 montiert werden muss, da die Befestigungspunkte im Fahrzeug diese Anordnung vorgeben. Um diese Winkelposition des Steuergeräts zur Messebene kompensieren zu können, weist das Steuergerät einen Algorithmus der, der der Berechnung der Messebene überlagert ist. Die Winkelposition ist fahrzeugspezifisch bekannt und durch die Verwendung der bekannten Winkelfunktionen können die von der Sensorik ermittelten Signale korrigiert werden. Die Signale der Sensorik 17; 21 werden praktisch auf die Miniatur-Messebene 19 projiziert.

Unabhängig von der Sensorik 17; 21 im Steuergerät 15 können auch Signale von weiteren Sensoreinrichtungen verwendet werden, die den Fahrzustand, insbesondere den zu erwartenden Fahrzustand prognostizieren. Dazu zählen z. B. ein Sensor 25 zur Bestimmung der Gaspedalstellung, ein Bremspedalsensor 27, ein Tachometer 29 oder auch ein Lenkwinkelsensor 31.

### Bezugszeichen

- 1: Fahrwerk-Systems
- 3: Fahrzeugaufbau
- 5; 7: Fahrzeugachse
- 9; 11: Schwingungsdämpfer
- 13: verstellbares Dämpfventil
- 15: Steuergerät
- 17: Sensorik
- 19: Miniatur-Messebene
- 21: tatsächliche Messebene
- 23: Drehratensensorik
- 25: Gaspedalsensor
- 27: Bremspedalsensor
- 29: Tachometer
- 31: Lenkwinkelsensor

## Patentansprüche

1. Steuergerät (15) für ein verstellbares Fahrwerk-System (3), umfassend eine Verbindung mit mindestens einer Sensorik (17; 23), die mindestens einen Fahrzustandsparameter eines Fahrzeugs bereitstellt, wobei der gemessene Fahrzustandsparameter räumlich auf eine Position außerhalb des Steuergeräts (15) bezogen ist, **dadurch gekennzeichnet, dass** die Sensorik (17; 23) innerhalb des Steuergeräts (15) angeordnet ist und eine virtuelle Miniatur-Messebene (19) bildet, die auf eine tatsächliche Messebene (21)bestimmt aus den geometrischen Abmessungen des Fahrzeugs extrapoliert ist.

2. Steuergerät nach Anspruch 1, **dadurch gekennzeichnet, dass** die Sensorik (17) ein Beschleunigungssignal bezogen auf eine Fahrzeuglängsachse (X), eine Fahrzeugquerachse (Y) und eine Fahrzeughochachse (Z) bereitstellt.

3. Steuergerät nach den Ansprüchen 1 oder 2, **dadurch gekennzeichnet, dass** die Sensorik eine Drehratensensorik (23) umfasst, die ein Drehratensignal (ϕ) bezogen auf eine Fahrzeuglängsachse (X), eine Fahrzeugquerachse (Y) und eine Fahrzeughochachse (Z) bereitstellt.

4. Steuergerät nach Anspruch 2, **dadurch gekennzeichnet, dass** das Beschleunigungssignal für alle drei Fahrzeugachsen von einem einzigen Sensor bereitgestellt wird.

5. Steuergerät nach Anspruch 3, **dadurch gekennzeichnet, dass** das Drehratensignal für alle drei Fahrzeugachsen von einem einzigen Sensor bereitgestellt wird.

6. Steuergerät nach den Ansprüchen 1 und 2, **dadurch gekennzeichnet, dass** die Beschleunigungssignale und die Drehratensignale von einem einzigen Sensor bereitgestellt werden.

7. Steuergerät nach mindestens einen der Ansprüche 1 bis 6, **dadurch gekennzeichnet, dass** das Steuergerät (15) einen Algorithmus aufweist, der eine Winkelposition des Steuergeräts (15) zur Messebene (21) kompensiert.

## Claims

1. Control device (15) for an adjustable suspension system (3), comprising a connection to at least one sensor system (17; 23) which makes available at least one driving state parameter of a vehicle, wherein the measured driving state parameter is referred spatially to a position outside the control device (15), **characterized in that** the sensor system (17; 23) is arranged inside the control device (15) and forms a virtual miniature measuring plane (19) which is extrapolated to an actual measuring plane (21) determined from the geometric dimensions of the vehicle.

2. Control device according to Claim 1, **characterized in that** the sensor system (17) makes available an acceleration signal referred to a vehicle longitudinal axis (X), a vehicle transverse axis (Y) and a vehicle vertical axis (Z).

3. Control device according to Claim 1 or 2, **characterized in that** the sensor system comprises a rotational rate sensor system (23) which makes available a rotational rate signal (ϕ) which is referred to a vehicle longitudinal axis (X), a vehicle transverse axis (Y) and a vehicle vertical axis (Z).

4. Control device according to Claim 2, **characterized in that** the acceleration signal is made available for all three vehicle axes by a single sensor.

5. Control device according to Claim 3, **characterized in that** the rotational rate signal is made available for all three vehicle axes by a single sensor.

6. Control device according to Claims 1 and 2, **characterized in that** the acceleration signals and the rotational rate signals are made available by a single sensor.

7. Control device according to at least one of Claims 1 to 6, **characterized in that** the control device (15) has an algorithm which compensates an angular position of the control device (15) with respect to the measuring plane (21).

## Revendications

1. Contrôleur (15) pour un système de châssis (3) positionnable, comprenant une liaison avec au moins un dispositif de détection (17 ; 23) qui délivre au moins un paramètre d'état de véhicule d'un véhicule, le paramètre d'état de véhicule mesuré se rapportant dans l'espace à une position à l'extérieur du contrôleur (15), **caractérisé en ce que** le dispositif de détection (17 ; 23) est disposé à l'intérieur du contrôleur (15) et forme un plan de mesure miniature virtuel (19) qui est extrapolé sur un plan de mesure réel (21) déterminé à partir des dimensions géométriques du véhicule.

2. Contrôleur selon la revendication 1, **caractérisé en ce que** le dispositif de détection (17) délivre un signal d'accélération rapporté à un axe longitudinal de véhicule (X), un axe transversal de véhicule (Y) et un axe de hauteur de véhicule (Z).

3. Contrôleur selon les revendications 1 ou 2, **caractérisé en ce que** le dispositif de détection comprend un dispositif de détection de la vitesse de rotation (23), lequel délivre un signal de vitesse de rotation (ϕ) rapporté à un axe longitudinal de véhicule (X), un axe transversal de véhicule (Y) et un axe de hauteur de véhicule (Z).

4. Contrôleur selon la revendication 2, **caractérisé en ce que** le signal d'accélération pour les trois axes de véhicule est délivré par un capteur unique.

5. Contrôleur selon la revendication 3, **caractérisé en ce que** le signal de vitesse de rotation pour les trois axes de véhicule est délivré par un capteur unique.

6. Contrôleur selon les revendications 1 et 2, **caractérisé en ce que** les signaux d'accélération et les signaux de vitesse de rotation sont délivrés par un capteur unique.

7. Contrôleur selon au moins l'une des revendications 1 à 6, **caractérisé en ce que** le contrôleur (15) présente un algorithme qui compense une position en angle du contrôleur (15) par rapport au plan de mesure (21).
